(19) Europäisches Patentamt / European Patent Office / Office européen des brevets

(11) **EP 4 357 485 A1**

(12) **EUROPEAN PATENT APPLICATION**
published in accordance with Art. 153(4) EPC

(43) Date of publication:
**24.04.2024 Bulletin 2024/17**

(21) Application number: **22824949.6**

(22) Date of filing: **13.06.2022**

(51) International Patent Classification (IPC):
**C25B 11/093** (2021.01)   **B01J 23/656** (2006.01)
**B01J 37/02** (2006.01)   **B01J 37/08** (2006.01)
**C25B 1/04** (2021.01)   **C25B 1/21** (2006.01)
**C25B 9/00** (2021.01)   **C25B 9/23** (2021.01)
**C25B 11/052** (2021.01)   **C25B 11/063** (2021.01)
**C25B 11/065** (2021.01)   **C25D 9/04** (2006.01)

(52) Cooperative Patent Classification (CPC):
**B01J 23/656; B01J 37/02; B01J 37/08; C25B 1/04;
C25B 1/21; C25B 9/00; C25B 9/23; C25B 11/052;
C25B 11/063; C25B 11/065; C25B 11/093;
C25D 9/04;** Y02E 60/36

(86) International application number:
**PCT/JP2022/023599**

(87) International publication number:
**WO 2022/264960 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2021   JP 2021099336**

(71) Applicants:
• **RIKEN**
  **Wako-shi, Saitama 351-0198 (JP)**
• **Tosoh Corporation**
  **Yamaguchi 746-8501 (JP)**

(72) Inventors:
• **NAKAMURA, Ryuhei**
  **Wako-shi, Saitama 351-0198 (JP)**
• **KONG, Shuang**
  **Wako-shi, Saitama 351-0198 (JP)**
• **LI, Ailong**
  **Wako-shi, Saitama 351-0198 (JP)**
• **FUSHIMI, Kazuna**
  **Wako-shi, Saitama 351-0198 (JP)**
• **SUETSUGU, Kazumasa**
  **Shunan-shi, Yamaguchi 746-8501 (JP)**
• **OKADA, Takuya**
  **Shunan-shi, Yamaguchi 746-8501 (JP)**

(74) Representative: **TBK**
  **Bavariaring 4-6**
  **80336 München (DE)**

(54) **IRIDIUM-MANGANESE OXIDE COMPOSITE MATERIAL, IRIDIUM-MANGANESE OXIDE COMPOSITE ELECTRODE MATERIAL, AND METHODS FOR PRODUCING SAME**

(57)   Provided are an iridium-manganese oxide composite material and an iridium-manganese oxide composite electrode material that are inexpensive and have high catalytic activity for use in an anode catalyst for oxygen evolution associated with water electrolysis. Also provided are methods for producing the same. An iridium-manganese oxide composite material comprising a manganese oxide and iridium distributed on at least a surface of the manganese oxide, the iridium having a metal valence of 3.1 or greater and 3.8 or less. An iridium-manganese oxide composite electrode material comprising a conductive substrate formed of a fiber, with the iridium-manganese oxide composite material being coated on at least a portion of the conductive substrate.

EP 4 357 485 A1

FIG. 5

**Description**

Technical Field

The present invention relates to an iridium-manganese oxide composite material and an iridium-manganese oxide composite electrode material for use in water splitting catalysts, to a membrane-electrode assembly and to methods for producing the same. More specifically, the present invention relates to an iridium-manganese oxide composite material and an iridium-manganese oxide composite electrode material for use as an anode catalyst for oxygen evolution in industrial water electrolysis that is performed under alkaline, neutral or acidic conditions or in water electrolysis that uses a polymer electrolyte membrane (PEM)-type electrolytic cell; to a membrane-electrode assembly; and to methods for producing the same.

Background Art

The problem of depletion of fossil fuels and the problem of environmental pollution have focused attention on the utilization of hydrogen, which is clean energy, and production methods therefor. A water electrolysis method produces high-purity hydrogen gas at a cathode by electrolyzing water and is an effective method. A feature of this process is that oxygen is simultaneously produced at an anode, which is a counter electrode. In the water electrolysis method, enabling efficient progression of the water splitting reaction requires the electrolysis to be performed while maintaining the decomposition voltage for the electrolysis at a low level by using an electrocatalyst having a low hydrogen overvoltage for the cathode and using an electrocatalyst having a low oxygen overvoltage for the anode. In this regard, elements and compounds that can serve as electrocatalyst materials having excellent low oxygen overvoltage for the anode have been proposed; the elements include platinum group metals, which are rare and examples of which include platinum (Pt), iridium (Ir) and ruthenium (Ru), and the compounds include oxides containing any of these elements (Patent Literature 1 and 2 and Non Patent Literature 1 to 3).

In particular, iridium (Ir) is widely known as a very highly active oxygen evolution electrocatalyst. However, iridium reserves are very small compared with other noble metals, and global production of iridium is very low because of its existence in certain limited regions; accordingly, there is a concern that even if the water electrolysis technology becomes widespread in the future, provision of sufficient amounts of catalysts may be impossible (Non Patent Literature 4).

Since electrocatalysts formed of such a platinum group metal are very expensive, alternative electrocatalysts that use an inexpensive transition metal have been developed. For example, transition metal materials that have been proposed in recent years include those formed of manganese (Mn), iron (Fe), cobalt (Co), nickel (Ni) or the like (Patent Literature 3 and 4 and Non Patent Literature 5 to 8) .

Unfortunately, a problem exists in that catalyst materials formed of a transition metal that have been proposed to date have significantly low activity (have a high oxygen overvoltage) compared with platinum group metal-based electrocatalysts. That is, materials for oxygen evolution electrocatalysts formed of an inexpensive transition metal and having a high catalytic activity comparable to that of platinum group metals, such as Pt and Ir, have not been realized.

Regarding this problem, a manganese oxide having an oxygen evolution electrocatalytic activity comparable to or better than that of Pt has been discovered; however, the activity is not comparable to the activity of Ir-based catalysts; Ir is considered to exhibit the highest activity among platinum group metal elements. Accordingly, there is a need for further development (Patent Literature 5).

Citation List

Patent Literature

PTL 1: Japanese Unexamined Patent Application Publication No. 8-269761
PTL 2: Japanese Unexamined Patent Application Publication (Translation of PCT Application) No. 2007-514520
PTL 3: Japanese Unexamined Patent Application Publication No. 2015-192993
PTL 4: International Publication No. 2009/154753
PTL 5: International Publication No. 2019/117199

Non Patent Literature

NPL 1: S. Trasatti, G. Buzzanca, J. Electroanal. Chem., 1971, 29, A1.
NPL 2: A. Harriman, I. J. Pickering, J. M. Thomas, P. A. Christensen, J. Chem. Soc., Faraday Trans.1, 1988, 84, 2795.
NPL 3: Y. Zhao, N. M. Vargas-Barbosa, E. A. Hernandez-Pagan, T. E. Mallouk, Small, 2011, 7, 2087.
NPL 4: F. Birol, World Energy Outlook 2016, International Energy Agency (IEA), Paris, 2016.
NPL 5: M. M. Najafpour, G. Renger, M. Holynska, A. N. Moghaddam, E. -M. Aro, R. Carpentier, H. Nishihara, J. J. Eaton-Rye, J. -R. Shen, S. I. Allakhverdiev, Chem. Rev., 2016, 116, 2886.
NPL 6: T. Takashima, K. Ishikawa, H. Irie, J. Phys. Chem. C, 2016, 120, 24827.
NPL 7: J. B. Gerken, J. G. McAlpin, J. Y. C. Chen, M. L. Rigsby, W. H. Casey, R. D. Britt, S. S. Stahl, J. Am. Chem. Soc., 2011, 133, 14431.
NPL 8: M. Dinca, Y. Surendranath, D. G. Nocera, Proc. Natl. Acad. Sci. U.S.A., 2010, 107, 10337.

Summary of Invention

Technical Problem

An object of the present invention relates to providing an iridium-manganese oxide composite material and an iridium-manganese oxide composite electrode material for use in water splitting catalysts, to a membrane-electrode assembly and to methods for producing the same.

More specifically, the present invention relates to an iridium-manganese oxide composite material that is a material for anode catalysts for oxygen evolution associated with industrial water electrolysis that is performed under alkaline, neutral or acidic conditions or with water electrolysis that uses a polymer electrolyte membrane (PEM)-type electrolytic cell, the iridium-manganese oxide composite material (hereinafter also referred to as an "iridium-manganese oxide of the present invention") being designed for use in water splitting catalysts and being less expensive while having higher oxygen evolution catalytic activity than existing iridium catalyst systems; to an iridium-manganese oxide composite electrode material designed for use in water splitting catalysts; to a membrane-electrode assembly in which the iridium-manganese oxide composite material is used; and to methods for producing the same.

Solution to Problem

The present inventors diligently conducted studies on catalyst materials that are used in oxygen evolution electrocatalysts for water electrolysis and, consequently, discovered that an iridium-manganese oxide composite material in which iridium is distributed on at least a surface of a manganese oxide and in which the iridium has a metal valence of 3.1 or greater and 3.8 or less has high oxygen evolution electrocatalytic activity and excellent durability even if the iridium is present in a very small amount. Accordingly, the present inventors completed the present invention. That is, the present invention provides an iridium-manganese oxide composite material for use in an oxygen evolution electrocatalyst associated with water electrolysis in which iridium is distributed on at least a surface of a manganese oxide and in which the iridium has a metal valence of 3.1 or greater and 3.8 or less.

The present inventors discovered that an iridium-manganese oxide composite electrode material in which the iridium-manganese oxide composite material of the present invention is coated on at least a portion of a conductive substrate formed of a conductive fiber exhibits particularly high oxygen evolution electrocatalytic activity. That is, the present invention provides an iridium-manganese oxide composite electrode material that is designed for use in oxygen evolution electrodes and in which the iridium-manganese oxide composite material of the present invention is coated on at least a portion of a conductive substrate formed of a conductive fiber.

Specifically, a summary of the present invention is as follows.

[1] An iridium-manganese oxide composite material characterized by comprising a manganese oxide and iridium distributed on at least a surface of the manganese oxide, the iridium having a metal valence of 3.1 or greater and 3.8 or less.

[2] The iridium-manganese oxide composite material according to [1], characterized in that, in an instance where the iridium-manganese oxide composite material coats at least a portion of a conductive substrate, a content of the iridium is 0.01 $mg/cm^2$ or greater and 0.2 $mg/cm^2$ or less per geometric area of the conductive substrate.

[3] The iridium-manganese oxide composite material according to [1] or [2], characterized in that a metal content ratio, which is a ratio of a content of the iridium to a total content of manganese and the iridium, is 0.2 atomic % or greater and 10 atomic % or less.

[4] The iridium-manganese oxide composite material according to any one of [1] to [3], characterized in that an Ir L3-edge spectrum obtained in an XAFS measurement has a peak appearing in a XANES region, and a position of the peak is 11200 eV or greater and 11230 eV or less.

[5] The iridium-manganese oxide composite material according to any one of [1] to [4], characterized in that a radial structure function obtained in an XAFS measurement has a peak corresponding to an iridium-oxygen bond, and a position of the peak is 1.0 Å or greater and 2.0 Å or less.

[6] The iridium-manganese oxide composite material according to any one of [1] to [5], characterized in that the iridium-manganese oxide composite material has a BET specific surface area of 15 $m^2$/g or greater and 100 $m^2$/g or less.

[7] The iridium-manganese oxide composite material according to any one of [1] to [6], characterized in that the manganese oxide has a manganese metal valence of 3.5 or greater and 4.0 or less.

[8] The iridium-manganese oxide composite material according to any one of [1] to [7], characterized in that, in an instance where the iridium-manganese oxide composite material coats at least a portion of a conductive substrate, a content of manganese is 0.12 mg/$cm^2$ or greater and 14.35 mg/$cm^2$ or less per geometric area of the conductive substrate.

[9] The iridium-manganese oxide composite material according to any one of [1] to [8], characterized in that the manganese oxide is an electrolytic manganese dioxide.

[10] The iridium-manganese oxide composite material according to any one of [1] to [9], characterized in that the manganese oxide is a manganese dioxide having one of crystalline phases or having a mixed phase including at least two of the crystalline phases, where the crystalline phases are a γ-type phase, a β-type phase, an ε-type phase and an α-type phase.

[11] An iridium-manganese oxide composite electrode material characterized by comprising a conductive substrate formed of a conductive fiber; and the iridium-manganese oxide composite material according to any one of [1] to [10], the iridium-manganese oxide composite material being coated on at least a portion of the conductive substrate.

[12] The iridium-manganese oxide composite electrode material according to [11], characterized in that the iridium-manganese oxide composite material is present in an amount of 0.1 mg/$cm^2$ or greater and 20 mg/$cm^2$ or less per geometric area of the conductive substrate.

[13] The iridium-manganese oxide composite electrode material according to [11] or [12], wherein the conductive substrate is formed of carbon, titanium or platinum-coated titanium.

[14] A membrane-electrode assembly comprising an electrode on which the iridium-manganese oxide composite material according to any one of [1] to [10] is supported; and a polymer electrolyte membrane.

[15] A method for producing the iridium-manganese oxide composite material according to any one of [1] to [10] characterized by comprising preparing a manganese oxide by performing electrolysis on a mixed solution containing a sulfuric acid and manganese sulfate and then immersing or contacting the manganese oxide in or with an iridium salt solution; and subsequently performing an annealing treatment.

[16] The method for producing the iridium-manganese oxide composite material according to [15], characterized in that a concentration of the sulfuric acid in the mixed solution containing the sulfuric acid and the manganese sulfate is 5 g/L or greater and 65 g/L or less.

[17] The method for producing the iridium-manganese oxide composite material according to [15] or [16], characterized in that the electrolysis of the mixed solution containing the sulfuric acid and the manganese sulfate is performed at a current density of 0.3 mA/$cm^2$ or greater and 20 mA/$cm^2$ or less.

[18] The method for producing the iridium-manganese oxide composite material according to any one of [15] to [17], characterized in that an iridium salt in the iridium salt solution is $K_2IrCl_6$.

[19] The method for producing the iridium-manganese oxide composite material according to any one of [15] to [18], characterized in that the annealing treatment is performed at a temperature of greater than 100°C and 600°C or less for a time of 10 minutes or more and 24 hours or less.

[20] A method for producing the iridium-manganese oxide composite electrode material according to any one of [11] to [13], characterized by comprising electrodepositing a manganese oxide on the at least a portion of the conductive substrate formed of a conductive fiber, by performing electrolysis on a mixed solution containing a sulfuric acid and manganese sulfate; subsequently immersing or contacting the manganese oxide in or with an iridium salt solution, thereby uniformly distributing iridium on the at least a surface of the manganese oxide and adsorbing the iridium thereon; and subsequently performing an annealing treatment.

[21] The method for producing the iridium-manganese oxide composite electrode material according to [20], characterized in that a concentration of the sulfuric acid in the mixed solution containing the sulfuric acid and the manganese sulfate is 5 g/L or greater and 65 g/L or less.

[22] The method for producing the iridium-manganese oxide composite electrode material according to [20] or [21], characterized in that the electrolysis of the mixed solution containing the sulfuric acid and the manganese sulfate is performed at a current density of 0.3 mA/$cm^2$ or greater and 20 mA/$cm^2$ or less.

[23] The method for producing the iridium-manganese oxide composite electrode material according to any one of [20] to [22], characterized in that an iridium salt in the iridium salt solution is $K_2IrCl_6$.

[24] The method for producing the iridium-manganese oxide composite electrode material according to any one of [20] to [23], characterized in that the annealing treatment is performed at a temperature of greater than 100°C and 600°C or less for a time of 10 minutes or more and 24 hours or less.

[25] An oxygen evolution electrode active material comprising the iridium-manganese oxide composite material according to any one of [1] to [10], the oxygen evolution electrode active material being associated with water electrolysis.

[26] An oxygen evolution electrode comprising the oxygen evolution electrode active material according to [25].

[27] A membrane-electrode assembly comprising the oxygen evolution electrode according to [26]; and a polymer electrolyte membrane.

[28] A water electrolysis device comprising the iridium-manganese oxide composite electrode material according to any one of [11] to [13] or the oxygen evolution electrode according to [26].

[29] A method for producing hydrogen comprising performing water electrolysis by using the iridium-manganese oxide composite electrode material according to any one of [11] to [13] or the oxygen evolution electrode according to [26] .

Advantageous Effects of Invention

Iridium-manganese oxide composite materials of the present invention and iridium-manganese oxide composite electrode materials of the present invention exhibit high activity and durability and act as inexpensive and excellent anode catalysts for oxygen evolution in industrial water electrolysis that is performed under alkaline, neutral or acidic conditions or in water electrolysis that uses a PEM-type electrolytic cell.

Furthermore, carbon dioxide may be, for instance, added to the electrolysis system that uses the iridium-manganese oxide composite material of the present invention or the iridium-manganese oxide composite electrode material of the present invention. In this case, the carbon dioxide or the like can be reduced at the cathode to produce hydrocarbon compounds (formic acid, formaldehyde, methanol, methane, ethane, propane and the like).

Brief Description of Drawings

[Fig. 1] An SEM photograph showing a surface of an iridium-manganese oxide composite electrode material of Example 1.

[Fig. 2] An SEM photograph showing a cross section of the iridium-manganese oxide composite electrode material of Example 1.

[Fig. 3] Photographs showing the distribution of elemental O, Ir and Mn; the photographs correspond to an SEM photograph of an iridium-manganese oxide composite material layer in the iridium-manganese oxide composite electrode material of Example 1.

[Fig. 4] XRD patterns of Example 1, which are XRD patterns of the iridium-manganese oxide composite electrode material and a conductive substrate made of a platinum-coated titanium mesh.

[Fig. 5] Linear sweep voltammograms of Examples 1 to 3 and Comparative Examples 1 and 3 demonstrating a relationship between a potential (voltage) and a current, which was measured in a PEM-type electrolytic cell during oxygen evolution (during water electrolysis).

[Fig. 6] Data of Examples 1 to 3 demonstrating a temporal change in decomposition voltage, which was measured in a PEM-type electrolytic cell at 80°C and 1 A/cm$^2$ in terms of a geometric area of a conductive substrate, during oxygen evolution (during water electrolysis).

[Fig. 7] Linear sweep voltammograms of Examples 4 to 6 demonstrating a relationship between a potential (voltage) and a current, which was measured in a PEM-type electrolytic cell during oxygen evolution (during water electrolysis).

[Fig. 8] Data of Examples 4 to 6 demonstrating a temporal change in decomposition voltage, which was measured in a PEM-type electrolytic cell at 80°C and 1.5 A/cm$^2$ during oxygen evolution (during water electrolysis).

Description of Embodiments

The present invention will be described in more detail below.

First, water splitting by electrolysis will be described by using an example of a reaction in which the reaction field is an acidic environment, such as that of PEM-type water electrolysis. On a cathode catalyst, two protons and two electrons react with each other to produce hydrogen as illustrated by Equation 1.

$$2H^+ + 2e^- \rightarrow H_2 \qquad \text{Equation 1}$$

On an anode catalyst, four electrons and four protons, together with oxygen, are produced from two water molecules as illustrated by Equation 2.

$$2H_2O \rightarrow O_2 + 4H^+ + 4e^- \qquad \text{Equation 2}$$

As a whole, the reaction is one in which two hydrogen molecules and one oxygen molecule are produced from two water molecules, as illustrated by Equation 3.

$$2H_2O \rightarrow 2H_2 + O_2 \qquad \text{Equation 3}$$

In general, the oxygen evolution reaction in Equation 2 is considered to be a rate-limiting step in all reactions, and, therefore, the development of a catalyst that enables the reaction to proceed with minimum energy is of importance in the relevant technical field. The present invention provides an oxygen evolution electrocatalyst having good catalytic properties for the oxidation of water.

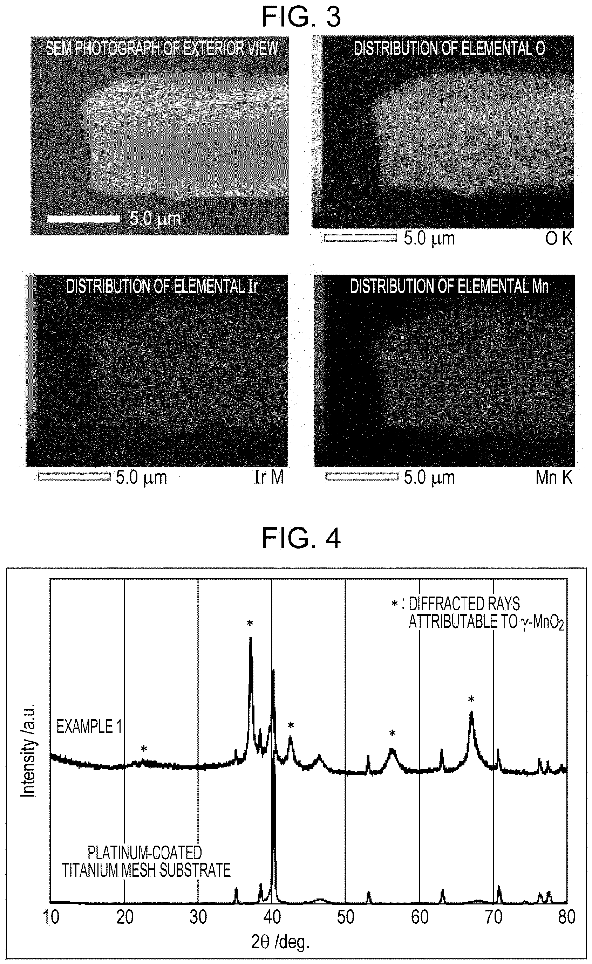

An iridium-manganese oxide composite material of the present invention comprises a manganese oxide and iridium distributed on at least a surface of the manganese oxide, and the iridium has a metal valence of 3.1 or greater and 3.8 or less. The iridium is distributed on at least a surface of the manganese oxide. For example, Fig. 3 demonstrates that light contrasting areas that indicate the locations of presence of elemental Mn and O exist across the entire surface in the SEM photograph image of the iridium-manganese oxide composite material layer. Furthermore, in Fig. 4, an XRD pattern of an iridium-manganese oxide composite electrode material demonstrates that the iridium-manganese oxide composite material layer is formed of γ-manganese oxide; thus, a major component is manganese oxide. Regarding the iridium, Fig. 3, for example, demonstrates that light contrasting areas that indicate the locations of presence of elemental Ir exist across the entire surface in the SEM photograph image of the iridium-manganese oxide composite material layer, and, further, according to the production method described later, the elemental Ir is introduced after the manganese oxide is formed; therefore, it is reasonable to believe that the iridium is distributed on at least a surface of the manganese oxide. If the metal valence of the iridium is less than 3.1, chemical stability for serving as a catalyst material is low, and, in particular, in instances where the material is used in an acidic environment, such as in a PEM, the iridium tends to be dissociated into ions and are, therefore, easily consumed. On the other hand, if the metal valence of the iridium is greater than 3.8, there is not a sufficient amount of trivalent iridium, which effectively acts as an active center, and, consequently, oxygen electrocatalytic activity is low. In terms of achieving excellent oxygen electrocatalytic activity, it is preferable that the metal valence of the iridium be 3.15 or greater and 3.6 or less. More preferably, the metal valence is 3.2 or greater and 3.5 or less.

In an instance where the iridium-manganese oxide composite material of the present invention coats at least a portion of a conductive substrate, it is preferable that a content of the iridium be 0.01 $mg/cm^2$ or greater and 0.2 $mg/cm^2$ or less per geometric area of the conductive substrate. If the content of the iridium is less than 0.01 $mg/cm^2$, the resulting properties are similar to those of a manganese oxide-only catalyst. On the other hand, if the content of the iridium is greater than 0.2 $mg/cm^2$, a catalytic activity comparable to that of an iridium oxide-only catalyst is exhibited; however, because of the use of a large amount of iridium, which is a scarce element, the catalyst is expensive, which reduces cost effectiveness. In terms of achieving excellent properties at low cost, it is preferable that the content of the iridium be 0.015 $mg/cm^2$ or greater and 0.15 $mg/cm^2$ or less. More preferably, the content is 0.02 $mg/cm^2$ or greater and 0.1 $mg/cm^2$ or less. As referred to herein, the "geometric area" corresponds to a projected area of the conductive substrate, with a thickness of the substrate not being taken into account.

Regarding the iridium-manganese oxide composite material of the present invention, it is preferable that a metal content ratio of the iridium, which is a ratio of a content of the iridium to a total content of the iridium and manganese, be 0.2 atomic % or greater and 10 atomic % or less. The metal content ratio of the iridium is important for the distribution of the iridium on at least a surface of the manganese oxide. Furthermore, it is inferred that the metal content ratio of the iridium has an influence on the control for enabling the metal valence of the iridium to fall within the range of the present invention, although correlation is not clear. If the metal content ratio of the iridium is less than 0.2 atomic %, the resulting properties are similar to those of a manganese oxide-only catalyst. On the other hand, if the metal content ratio of the iridium is greater than 10 atomic %, a catalytic activity comparable to that of an iridium oxide-only catalyst is exhibited; however, because of the use of a large amount of iridium, which is a scarce element, the catalyst is very expensive, which reduces cost effectiveness. In terms of achieving excellent properties at low cost, it is preferable that the metal content ratio of the iridium be 0.3 atomic % or greater and 5 atomic % or less. More preferably, the metal content ratio is 0.4 atomic % or greater and 2 atomic % or less.

Regarding the iridium-manganese oxide composite material of the present invention, it is preferable that an Ir L3-edge spectrum obtained in an XAFS measurement have a peak appearing in a XANES region and that the position of the peak be 11200 eV or greater and 11230 eV or less. In general, the position of the peak of spectra in the XANES region tends to be affected by the metal valence; the lower the metal valence, the closer the position of the peak to the low-energy side, and the higher the metal valence, the closer the position of the peak to the high-energy side. When the position of the peak appearing in the XANES region of the Ir L3-edge spectrum is greater than or equal to 11200 eV, the metal valence of the iridium can be maintained at a higher level, and, therefore, the chemical stability for serving as a catalyst material can be maintained at a higher level; consequently, in particular, in instances where the material is used in an acidic environment, such as in a PEM, the dissociation into iridium ions can be prevented to a greater extent. When the position of the peak appearing in the XANES region of the Ir L3-edge spectrum is less than or equal to 11230 eV, the amount of iridium that effectively acts as active centers can be maintained at a higher level, and, consequently, the oxygen electrocatalytic activity can be maintained at a higher level. In terms of achieving excellent oxygen electrocatalytic activity, it is more preferable that the position of the peak appearing in the XANES region of the Ir L3-edge spectrum be 11210 eV or greater and 11220 eV or less.

Regarding the iridium-manganese oxide composite material of the present invention, it is preferable that a radial structure function obtained in an XAFS measurement have a peak corresponding to an iridium-oxygen bond and that the position of the peak be 1.0 Å or greater and 2.0 Å or less. When the specified value is greater than or equal to 1.0 Å, aggregation of iridium atoms can be prevented to a greater extent, and, therefore, the degree of distribution of the iridium on the manganese oxide can be maintained at a higher level. When the specified value is less than or equal to 2.0 Å, interaction between the iridium and the oxygen can be enhanced, and, therefore, collapse can be prevented to a greater extent. Regarding the iridium-manganese oxide composite material, it is more preferable, in terms of stably distributing iridium, that the radial structure function obtained in an XAFS measurement have a peak corresponding to an iridium-oxygen bond and that the position of the peak be 1.3 Å or greater and 1.6 Å or less.

It is preferable that the iridium-manganese oxide composite material of the present invention have a BET specific surface area of 15 $m^2/g$ or greater and 100 $m^2/g$ or less. The BET specific surface area mainly reflects a state of the manganese oxide. If the BET specific surface area is less than 15 $m^2/g$, the active sites onto which the iridium is adsorbed are limited, and, therefore, the state of distribution of iridium that effectively acts as a catalyst deteriorates. If the BET specific surface area is greater than 100 $m^2/g$, the active sites onto which the iridium can be adsorbed increase, but a manganese oxide coating is porous, which reduces a strength and, therefore, results in a tendency to collapse. The BET specific surface area of the iridium-manganese oxide composite material is more preferably 20 $m^2/g$ or greater and 70 $m^2/g$ or less and even more preferably 30 $m^2/g$ or greater and 60 $m^2/g$ or less.

It is preferable that the manganese oxide of the iridium-manganese oxide composite material of the present invention have a manganese metal valence of 3.5 or greater and 4.0 or less. If the metal valence of the manganese oxide is less than 3.5, the chemical stability for serving as a catalyst material is low, and, in particular, in instances where the material is used in an acidic environment, such as in a PEM, the manganese oxide is continuously dissociated into divalent manganese ions in a unilateral manner and is, therefore, easily consumed. On the other hand, if the metal valence of the manganese oxide is greater than 4.0, the chemical stability is also low. This is because pentavalent manganese and heptavalent manganese, which are readily soluble, are present therein. Accordingly, in terms of stably distributing iridium, it is more preferable that the manganese metal valence of the manganese oxide be 3.6 or greater and 4.0 or less. Even more preferably, the manganese metal valence is 3.7 or greater and 4.0 or less.

Regarding the iridium-manganese oxide composite material of the present invention, it is preferable that an energy corresponding to an edge jump of 0.5 in a XANES region of a Mn K-edge spectrum obtained in an XAFS measurement be 6520 eV or greater and 6600 eV or less provided that the edge jump for normalization is 1. As stated above, the energy position of spectra appearing in the XANES region tends to be affected by the metal valence. When the specified value is greater than or equal to 6520 eV, the chemical stability for serving as a catalyst material can be maintained at a higher level, and, in particular, in instances where the material is used in an acidic environment, such as in a PEM, the dissociation into divalent manganese ions can be prevented to a greater extent. When the specified value is less than or equal to 6600 eV, the dissociation into pentavalent and heptavalent manganese ions can be prevented, and, consequently, the chemical stability can be maintained at a higher level. Regarding the manganese oxide, it is more preferable, in terms of stably distributing iridium, that the energy corresponding to an edge jump of 0.5 in a XANES region of a Mn K-edge spectrum be 6530 eV or greater and 6560 eV or less provided that the edge jump for normalization is 1.

In an instance where the iridium-manganese oxide composite material of the present invention coats at least a portion of a conductive substrate, it is preferable that a content of the manganese be 0.12 $mg/cm^2$ or greater and 14.35 $mg/cm^2$ or less per geometric area of the conductive substrate. When the content of the manganese is greater than or equal to 0.12 $mg/cm^2$, an amount of iridium that can be adsorbed on the manganese oxide can be maintained, and, consequently, the catalytic activity can be maintained at a higher level. When the content of the manganese is less than or equal to 14.35 $mg/cm^2$, a resistance of the manganese oxide can be maintained at a lower level, and, therefore, the catalytic activity can be maintained at a higher level. Accordingly, the content of the manganese is more preferably 0.30 $mg/cm^2$ or greater and 2.40 $mg/cm^2$ or less and even more preferably 0.60 $mg/cm^2$ or greater and 1.20 $mg/cm^2$ or less.

As referred to herein, the "geometric area" corresponds to the projected area of the conductive substrate, with the thickness of the substrate not being taken into account.

Regarding the iridium-manganese oxide composite material of the present invention, it is preferable that the radial structure function obtained in an XAFS measurement have a peak corresponding to a manganese-oxygen bond and that the position of the peak be 1.0 Å or greater and 2.0 Å or less. When the specified value is greater than or equal to 1.0 Å, aggregation of manganese atoms can be prevented to a greater extent, and, therefore, the degree of distribution of the iridium can be maintained at a higher level. When the specified value is less than or equal to 2.0 Å, interaction between the manganese and the oxygen and interaction in the manganese can be enhanced, and, therefore, collapse can be prevented to a greater extent. Regarding the iridium-manganese oxide composite material, it is more preferable that the radial structure function obtained in an XAFS measurement have a peak corresponding to a manganese-oxygen bond and that the position of the peak be 1.3 Å or greater and 1.7 Å or less.

The manganese oxide of the iridium-manganese oxide composite material of the present invention may be, for example, an electrolytic manganese dioxide produced by an electrolytic method, a manganese dioxide produced by a chemical method, or the like. Preferably, the manganese oxide is an electrolytic manganese dioxide.

The manganese oxide of the iridium-manganese oxide composite material of the present invention may be a manganese dioxide having a crystalline phase in which a basic crystal structure is a $\gamma$-type structure, a $\beta$-type structure, an $\epsilon$-type structure or an $\alpha$-type structure or may be a manganese dioxide having a mixed phase in which at least two of these crystal structures are mixed.

In instances where the iridium-manganese oxide composite material of the present invention is supported on an electrode, the iridium-manganese oxide composite material of the present invention can serve as an oxygen evolution electrode active material associated with water electrolysis and, accordingly, can provide an oxygen evolution electrode with catalytic properties for water splitting reactions. A membrane-electrode assembly can be formed by stacking the oxygen evolution electrode active material-containing oxygen evolution electrode, a polymer electrolyte membrane and an electrode provided with a hydrogen evolution catalyst. Examples of the polymer electrolyte membrane include fluororesin-based cation exchange membranes. Examples of the hydrogen evolution catalyst include platinum microparticles. In the present invention, a water electrolysis device comprising the oxygen evolution electrode is provided, and further, hydrogen can be produced by performing water electrolysis with the oxygen evolution electrode.

A method for producing the iridium-manganese oxide composite material of the present invention will now be described.

The iridium-manganese oxide composite material of the present invention can be produced, for example, as follows. A manganese oxide is electrodeposited onto an electrode substrate, such as a pure titanium plate, from an electrolyte solution, which may be a mixed solution containing a sulfuric acid and manganese sulfate. Thereafter, the manganese oxide is immersed in or contacted with an iridium salt solution and subsequently subjected to an annealing treatment.

After the manganese oxide has been electrodeposited from the mixed solution containing a sulfuric acid and manganese sulfate, the manganese oxide may be removed from the electrode substrate and formed into a powder by being ground, for instance. Regarding concentrations of the components in the mixed solution containing a sulfuric acid and manganese sulfate, it is preferable that the concentration of the sulfuric acid be controlled to be 5 g/L or greater and 65 g/L or less, and it is more preferable that the concentration be controlled to be 20 g/L or greater and 50 g/L or less.

The concentration of the manganese (manganese ions of the manganese sulfate) in the mixed solution is not particularly limited as long as the concentration does not exceed a solubility. The concentration is preferably 5 g/L or greater and 50 g/L or less and more preferably 10 g/L or greater and 30 g/L or less.

An effective way for maintaining the concentrations of the components in the mixed solution is to add an appropriate amount of manganese sulfate corresponding to the amount of manganese consumed in the electrolytic oxidation or continuously supply a solution of manganese sulfate.

Note that regarding the mixed solution of a sulfuric acid and manganese sulfate, the concentration of the sulfuric acid is a value in which the concentration of the divalent anion (sulfate ion) of the manganese sulfate is not included.

In the method for electrodepositing the manganese oxide of the iridium-manganese oxide composite material of the present invention, an electrolysis current density is not particularly limited and is preferably 0.3 mA/cm$^2$ or greater and 20 mA/cm$^2$ or less per geometric area of a conductive substrate. In such a case, the manganese oxide can be electrodeposited efficiently and stably. In terms of producing the iridium-manganese oxide composite material of the present invention more stably, it is more preferable that the electrolysis current density be 1 mA/cm$^2$ or greater and 10 mA/cm$^2$ or less. The electrolysis current density is even more preferably 3 mA/cm$^2$ or greater and 8 mA/cm$^2$ or less. As referred to herein, the "geometric area" corresponds to the projected area of the conductive substrate, with the thickness of the substrate not being taken into account.

In the method for electrodepositing the manganese oxide of the iridium-manganese oxide composite material of the present invention, an electrolysis temperature may be, for example, 93°C or greater and 98°C or less. The greater the electrolysis temperature, the higher the efficiency for the electrolytic production of the manganese oxide that is deposited. Accordingly, it is preferable that the electrolysis temperature be greater than 94°C.

After the manganese oxide electrodeposited on an electrode substrate, such as a pure titanium plate, is removed from the electrode substrate, the manganese oxide is subjected to coarse pulverization in a jaw crusher or the like. Thereafter, the manganese oxide is subjected to grinding for an adjustment for enabling the manganese oxide, as a discrete unit, to have a predetermined average secondary particle size; this grinding is performed in a roller mill, a vertical mill, a Loesche mill, a jet mill or the like. Subsequently, the produced manganese oxide is subjected to a washing step and a neutralization step for removal of the residual electrolyte solution and the like and is subsequently dried in a flash dryer or the like. During the flash drying, a fine submicron powder of the manganese oxide produced as a by-product due to over-grinding in the grinding step can be collected with a bag filter dust collector or the like to be separated. Furthermore, in some instances, a heat treatment step is additionally performed at a temperature of 200°C or greater and 500°C or less for the production of the manganese oxide.

Subsequently, the manganese oxide is immersed in a vessel containing an iridium salt solution, or the manganese oxide is contacted with an iridium salt solution.

Examples of types of the iridium salt of the iridium salt solution include potassium hexachloroiridate ($K_2IrCl_6$) and hexachloroiridium acid ($H_2IrCl_6$).

The concentration of the iridium in the iridium salt solution is also not particularly limited as long as the concentration does not exceed a solubility. The concentration is preferably 0.1 g/L or greater and 10 g/L or less and more preferably 0.3 g/L or greater and 5 g/L or less.

Conditions for immersing the manganese oxide in an iridium salt solution or contacting the manganese oxide with an iridium salt solution are not particularly limited. Preferably, the immersing or contacting is performed at a temperature of 20°C or greater and 100°C or less for a time of 30 minutes or more and 24 hours or less. When the immersion time or the contact time and the immersion temperature or the contact temperature are within the above-mentioned ranges, the amount of iridium that is adsorbed onto the manganese oxide can be controlled.

Subsequently, an annealing treatment is performed. Conditions for the annealing treatment are not particularly limited. The annealing treatment may be performed, for example, in air or under a nitrogen stream at a temperature of greater than 100°C and 600°C or less, and the time for the annealing treatment may be, for example, 10 minutes or more and 24 hours or less. The temperature for the annealing treatment is preferably 300°C or greater and 550°C or less and more preferably 350°C or greater and 500°C or less. The time for the annealing treatment is preferably 1 hour or more and 16 hours or less and more preferably 2 hours or more and 8 hours or less. Effects of this annealing treatment are not clear. It is inferred that selection of conditions for the annealing treatment results in enhanced interaction between the iridium and the manganese oxide, and that the metal valence of the iridium can, therefore, be controlled to be within a more desirable range.

Now, an iridium-manganese oxide composite electrode material of the present invention will be described.

The iridium-manganese oxide composite electrode material of the present invention comprises a conductive substrate formed of a conductive fiber and comprises the iridium-manganese oxide composite material of the present invention described above, the iridium-manganese oxide composite material being coated on at least a portion of the conductive substrate. In this regard, it is preferable that an amount of coating of the iridium-manganese oxide composite material of the present invention be 0.1 mg/cm$^2$ or greater and 20 mg/cm$^2$ or less per geometric area of the conductive substrate. As referred to herein, the "geometric area" corresponds to the projected area of the conductive substrate, with the thickness of the substrate not being taken into account.

When the amount of coating of the iridium-manganese oxide composite material of the present invention is within the above-mentioned range, the coating on the fiber can be one in which the iridium-manganese oxide composite material is present in a form of islands or coats the entirety of an outer surface of the fiber, and an average thickness of the coating can be approximately less than or equal to 25 μm, depending on a size and a porosity of the fiber that forms the conductive substrate. Note that the coating of the iridium-manganese oxide composite material on the fiber is formed of secondary particles, and, therefore, typically, the average thickness of the coating corresponds to the average secondary particle size of the iridium-manganese oxide composite material that forms the coating.

Regarding the iridium-manganese oxide composite electrode material of the present invention, there is a relationship in which the average thickness of the iridium-manganese oxide composite material that coats the fiber of the conductive substrate increases depending on the amount of the iridium-manganese oxide composite material that has been coated thereon. In particular, the amount of coating of the iridium-manganese oxide composite material is more preferably 0.2 mg/cm$^2$ or greater and 10 mg/cm$^2$ or less, even more preferably 0.3 mg/cm$^2$ or greater and 7 mg/cm$^2$ or less and particularly preferably 0.5 mg/cm$^2$ or greater and 5 mg/cm$^2$ or less. Note that the thickness of the coating layer of the iridium-manganese oxide composite material can be determined, for example, by subtracting a fiber diameter/thickness of the conductive fiber, which is the structural unit of the conductive substrate, from a thickness of the iridium-manganese oxide composite electrode observed in a scanning electron microscope (SEM) image.

In the iridium-manganese oxide composite electrode material of the present invention, it is preferable that the conductive substrate be formed of carbon, titanium or platinum-coated titanium. Examples of the carbon include carbon paper formed of a conductive carbon fiber. Examples of the titanium include titanium meshes formed of a fibrous conductive metallic titanium wire; and sintered titanium. Examples of the platinum-coated titanium include platinum-coated titanium meshes in which a surface of a fibrous conductive metallic titanium wire is coated with platinum; and sintered titanium.

The iridium-manganese oxide composite electrode material of the present invention can be produced, for example, as follows. A conductive substrate typified by carbon, titanium, platinum-coated titanium or the like is used instead of the above-mentioned electrode substrate made of a pure titanium plate. A mixed solution containing a sulfuric acid and manganese sulfate is electrolyzed to electrodeposit a manganese oxide on at least a portion of the conductive substrate formed of a conductive fiber. Subsequently, the manganese oxide is immersed in or contacted with an iridium salt solution to uniformly distribute iridium on at least a surface of the manganese oxide and adsorb the iridium thereon, and thereafter, the resultant is subjected to an annealing treatment. In this instance, it is preferable that the iridium-manganese oxide composite electrode material be produced such that the amount of coating of the iridium-manganese oxide composite material per geometric area of the conductive substrate falls within the above-mentioned preferred range. Note that the production of the iridium-manganese oxide composite electrode material of the present invention is accomplished in a process in which after the manganese oxide produced by the electrolysis of a mixed solution containing a sulfuric acid and manganese sulfate is immersed in or contacted with an iridium salt solution, an annealing treatment is performed; as a result, an iridium-manganese oxide composite material is deposited on the conductive substrate, that is, the iridium-manganese oxide composite material of the present invention is provided.

Regarding concentrations of the components in the mixed solution containing a sulfuric acid and manganese sulfate that is used in the production of the iridium-manganese oxide composite electrode material of the present invention, it is preferable that the concentration of the sulfuric acid be 5 g/L or greater and 65 g/L or less, and it is more preferable that the concentration be 20 g/L or greater and 50 g/L or less.

The concentration of the manganese (manganese ions of the manganese sulfate) in the mixed solution is not particularly limited as long as the concentration does not exceed a solubility. The concentration is preferably 5 g/L or greater and 50 g/L or less and more preferably 10 g/L or greater and 30 g/L or less.

An effective way for maintaining the concentrations of the components in the mixed solution is to add an appropriate amount of manganese sulfate corresponding to the amount of manganese consumed in the electrolytic oxidation or continuously supply a solution of manganese sulfate.

Note that regarding the mixed solution of a sulfuric acid and manganese sulfate, the concentration of the sulfuric acid is a value in which the concentration of the divalent anion (sulfate ion) of the manganese sulfate is not included.

In the method for electrodepositing the manganese oxide of the iridium-manganese oxide composite electrode material of the present invention, the electrolysis current density is not particularly limited and is preferably 0.3 mA/cm$^2$ or greater and 20 mA/cm$^2$ or less per geometric area of a conductive substrate. In such a case, the manganese oxide can be electrodeposited efficiently and stably. In terms of producing the iridium-manganese oxide composite electrode material of the present invention more stably, it is more preferable that the electrolysis current density be 1 mA/cm$^2$ or greater and 10 mA/cm$^2$ or less. The electrolysis current density is even more preferably 3 mA/cm$^2$ or greater and 8 mA/dm$^2$ or less.

In the method for electrodepositing the manganese oxide of the iridium-manganese oxide composite electrode material of the present invention, the electrolysis temperature may be, for example, 93°C or greater and 98°C or less. The greater the electrolysis temperature, the higher the efficiency for the electrolytic production of the manganese oxide that is deposited. Accordingly, it is preferable that the electrolysis temperature be greater than 94°C.

Examples of types of the iridium salt of the iridium salt solution include potassium hexachloroiridate ($K_2IrCl_6$) and hexachloroiridium acid ($H_2IrCl_6$).

The concentration of the iridium in the iridium salt solution is also not particularly limited as long as the concentration does not exceed a solubility. The concentration is preferably 0.1 g/L or greater and 10 g/L or less and more preferably 0.3 g/L or greater and 5 g/L or less.

Preferably, the conductive substrate is a plate-shaped substrate having a thickness of less than or equal to 1 mm, which may be prepared by molding or sintering a conductive fiber having a thickness in terms of a fiber diameter of less than or equal to 100 um, where examples of the conductive fiber include fibers made of carbon or metallic titanium. Preferably, the conductive substrate has a porosity of, for example, greater than or equal to 40%. More preferably, the porosity is 50% or greater and 90% or less. As referred to herein, the porosity is defined by a volume of a space portion in which the conductive fiber and the like are not present, relative to a volume of the conductive substrate.

Before the manganese oxide is electrodeposited, the conductive substrate may be treated with acid, such as hydrochloric acid, sulfuric acid, nitric acid, oxalic acid or the like, to remove a passivation film from the surface of the substrate and hydrophilize the surface. Such a process is effective. Another effective process is to impart water repellency to the conductive substrate, so that the location within the conductive substrate at which the manganese oxide is to be deposited can be controlled or that gas diffusion properties that are important for the actual use as an electrode for water electrolysis can be imparted. The imparting of water repellency can be accomplished by immersing the conductive substrate in, for instance, a dispersion of a fluororesin.

Examples of conditions for electrodepositing the manganese oxide of the iridium-manganese oxide composite material of the present invention onto a conductive substrate include those mentioned above, namely, the concentration of the sulfuric acid and the concentration of the manganese in the mixed solution of a sulfuric acid and manganese sulfate, the electrolysis current density, the electrolysis temperature and the like; ranges of these are to be selected, and the electrodeposition is to be performed for an electrolysis time of 5 minutes to 120 minutes. After the manganese oxide has been electrodeposited on the conductive substrate, the conductive substrate is washed with water and dried, and subsequently, the conductive substrate on which the manganese oxide has been electrodeposited is directly immersed in, for instance, a vessel containing an iridium salt solution, or the conductive substrate on which the manganese oxide has been electrodeposited is, for instance, contacted with an iridium salt solution, to allow iridium to be adsorbed onto at least a surface of the manganese oxide. Lastly, the resultant is subjected to an annealing treatment in air or a nitrogen atmosphere at a temperature of greater than 100°C and 600°C or less for a time of more than 10 minutes and 24 hours or less. In this manner, the iridium-manganese oxide composite electrode material of the present invention can be produced.

Conditions for immersing the manganese oxide electrodeposited on at least a portion of the conductive substrate, which is formed of a conductive fiber, in an iridium salt solution or for contacting the manganese oxide with an iridium salt solution are not particularly limited. Preferably, the immersing or contacting is performed at a temperature of 20°C or greater and 100°C or less for a time of 30 minutes or more and 24 hours or less. When the immersion time or the contact time and the immersion temperature or the contact temperature are within the above-mentioned ranges, the amount of iridium that is adsorbed onto the manganese oxide can be controlled.

The temperature for the annealing treatment is preferably 300°C or greater and 550°C or less and more preferably 350°C or greater and 500°C or less. The time for the annealing treatment is preferably 1 hour or more and 16 hours or less and more preferably 2 hours or more and 8 hours or less.

In the iridium-manganese oxide composite electrode material of the present invention, the iridium-manganese oxide composite material can be coated in an intentionally unbalanced manner, that is, the iridium-manganese oxide composite material can be preferentially coated onto only one surface while the iridium-manganese oxide composite material is substantially not coated onto the other surface. This can be achieved by shielding one of the surfaces of the conductive substrate with a resinous film or the like during the electrodeposition of the manganese oxide.

Furthermore, it is inferred that the annealing treatment produces suitable effects for the iridium-manganese oxide composite electrode material of the present invention; specifically, for instance, interaction between the iridium and the manganese oxide is enhanced, which enables the metal valence of the iridium to be controlled to be within a desired range, and in addition, adhesion between the iridium-manganese oxide composite material and the conductive fiber is further increased, or the crystallinity of the iridium-manganese oxide composite material is further increased.

In instances where the iridium-manganese oxide composite electrode material of the present invention, a polymer electrolyte membrane and an electrode provided with a hydrogen evolution catalyst are stacked, the resultant is a multilayer body. In the present invention, a water electrolysis device comprising the iridium-manganese oxide composite electrode material of the present invention is provided, and further, hydrogen can be produced by performing water electrolysis with the iridium-manganese oxide composite electrode material.

EXAMPLES

The present invention will now be described in more detail with reference to Examples and Comparative Examples. It should be noted that the present invention is not limited to the Examples.

<Analysis of Metal Concentration of Mixed Solution of Sulfuric Acid and Manganese Sulfate or Iridium Salt Solution>

A mixed solution of a sulfuric acid and manganese sulfate was diluted, and elemental manganese was quantitatively measured by ICP-AES equipment (Optima 8300, manufactured by PerkinElmer, Inc.). Furthermore, an iridium salt solution was diluted, and the concentration of elemental iridium was quantitatively measured with a UV-Vis spectrometer (UV-2550, manufactured by Shimadzu Corporation).

<SEM Surface Observation and Composition Analysis of Iridium-Manganese Oxide Composite Material and Iridium-Manganese Oxide Composite Electrode Material>

A surface morphology and a state of dispersion of iridium were analyzed, and a cross-sectional elemental analysis were performed, with an SEM-EDX instrument (JSF-7800F, manufactured by Hoskin Scientific). For the cross-sectional elemental analysis, conductive carbon tape was used to prevent tailing.

<Calculation of Metal Valences of Iridium-Manganese Oxide Composite Material and Iridium-Manganese Oxide Composite Electrode Material>

The metal valences of the iridium and the manganese were determined with an XPS spectrometer (PHI 5000 Versa Prove II, manufactured by Ulvac, Inc.). The radiation source used was AlK$\alpha$ (1486.6 eV). A C1s spectrum with 284.6 eV was used as a reference for the binding energy, a pass energy of 187.85 eV was used and a survey scan mode was used. For a high-resolution analysis of an Ir 4f, a low pass energy of 11.75 eV was used. For analyses of the other elements, a pass energy of 23.5 eV was used. The obtained spectra were analyzed with CasaXPS software. A fitting model proposed by Pfeifer was used for the fitting of the Ir 4f spectrum, and a model reported by Eugene S. Ilton was used for the fitting of a Mn 2p spectrum.

<XAFS Analysis of Iridium-Manganese Oxide Composite Material>

An XAFS measurement was performed with a beamline BL14B2 of a large synchrotron radiation facility SPring-8. The Mn K-edge spectrum was measured with a transmission method by using a Si (111) plane of a two-crystal spectrometer. The Ir L3-edge spectrum was measured with a fluorescence method by using a Si (311) plane of a two-crystal spectrometer.

<Calculation of BET Specific Surface Area of Iridium-Manganese Oxide Composite Material and Iridium-Manganese Oxide Composite Electrode Material>

The BET specific surface area was measured with a BET single-point method by using nitrogen adsorption. The measurement instrument used was a gas adsorption specific surface area analyzer (FlowSorb III, manufactured by Shimadzu Corporation). Before the measurement, the measurement sample was degassed by being heated at 150°C for 40 minutes. When the measurement on the iridium-manganese oxide composite electrode material was performed, the BET specific surface area of the conductive substrate, which was a carbon mesh, a titanium mesh or a platinum-coated titanium mesh, was exclusively measured in advance. The BET specific surface area of the iridium-manganese oxide composite material alone was determined by subtracting the BET specific surface area of the conductive substrate from the BET specific area of the iridium-manganese oxide composite electrode material.

<XRD Measurement of Iridium-Manganese Oxide Composite Electrode Material>

An XRD measurement was performed with an X-ray diffractometer (Ultima+, manufactured by Rigaku Corporation); the radiation source was CuK$\alpha$ radiation ($\lambda$=1.5418 Å), the operating potential was 40 kV and the operating current was 40 mA. In the XRD measurement on the iridium-manganese oxide composite electrode material, diffracted rays of Pt and Ti, which were derived from the conductive substrate, were also detected.

<Measurement of Amount of Electrodeposited Manganese Oxide and Amount of Coating of Iridium-Manganese Oxide Composite Material>

The amount of the electrodeposited manganese oxide and the amount of coating of the iridium-manganese oxide composite material were measured in the following manners.
Before the electrodeposition was performed, a weight 1, which was a weight of the substrate (electrode substrate, such as titanium, or conductive substrate), was measured with a balance. After the electrodeposition was performed, a weight 2, which was a weight of the substrate on which the manganese oxide was deposited, was measured with the balance, and the amount of the electrodeposited manganese oxide was determined as the difference between the weight 1 and the weight 2 (weight 2 - weight 1).
The amount of coating of the iridium-manganese oxide composite material in the iridium-manganese oxide composite electrode material was determined as the difference between a weight 3, measured with the balance, and the weight 1 of the substrate (weight 3 - weight 1). The weight 3 was a weight of the substrate having thereon the iridium-manganese oxide composite material that had undergone the electrodeposition of the manganese oxide, the contacting with an iridium salt solution and an annealing treatment.

<Construction of PEM-type Electrolytic Cell for Evaluation of Oxygen Evolution Electrocatalyst Properties>

A PEM-type electrolytic cell that used the electrode material made of the conductive substrate having the iridium-manganese oxide composite material coated thereon was constructed as follows. The electrode material (planar mesh shape, 1 cm $\times$ 1 cm) was used as a working electrode. For a counter electrode, a conductive catalyst ink was prepared from a catalyst, which was a carbon-supported 20 wt% platinum catalyst (20% Platinum on Vulcan XC-72, Item #PTC20-1, Fuel Cell Earth). The conductive catalyst ink was applied to carbon paper and air-dried. In this manner, the counter electrode was prepared. A Nafion membrane (Nafion 115, manufactured by Sigma-Aldrich) was used as an electrolyte membrane. The electrolyte membrane was washed and protonated (pretreated) by being boiled in a 3% aqueous solution of hydrogen peroxide, purified water, a 1 M aqueous solution of sulfuric acid and then purified water, each for 1 hour. Next, the electrolyte membrane was held with the working electrode and the counter electrode at the surfaces on which the catalysts were coated. The resultant was hot-pressed in a hot press (A-010D, manufactured by FC-R&D) at 135°C and with a clamping force of 400 kg/cm$^2$ for 3 minutes. In this manner, a membrane-electrolyte assembly (MEA) was produced. The MEA had a stainless steel mesh (#100) on the cathode side and a titanium mesh (#100) on the anode side and thus had improved adhesion that could be exhibited even during an electrolysis operation. The MEA was mounted to a housing of a PEM-type electrolytic cell (WE-4S-RICW, manufactured by FC Development Co, Ltd.).

<Electrochemical Measurement 1 Measurement of Current-Voltage Curve>

To evaluate the catalytic properties for the oxidation of water associated with an actual device, a measurement of a current-voltage curve was performed at an operating temperature of 80°C with the PEM-type electrolytic cell constructed with the electrode material made of the conductive substrate having the iridium-manganese oxide composite material coated thereon. In this measurement, a two-electrode system with only a working electrode and a counter electrode was used, and the current-voltage curve was measured by gradually increasing the voltage applied. Purified water was supplied to the PEM-type electrolytic cell. The rate at which the voltage was increased was 5 mV/s so that the voltage at which a current started to flow could be easily recognized.

<Electrochemical Measurement 2 Measurement of Stability of Decomposition Voltage>

To evaluate the stability of the catalytic properties for the oxidation of water associated with an actual device, a measurement of the decomposition voltage was performed at an operating temperature of 80°C with the PEM-type electrolytic cell constructed with the electrode material made of the conductive substrate having the iridium-manganese oxide composite material coated thereon. In this measurement, a two-electrode system with only a working electrode and a counter electrode was used, and temporal changes in the decomposition voltage were measured while the density of the current to be applied between the electrodes was maintained at 1 A/cm$^2$ per geometric area of the conductive substrate. Purified water was supplied to the PEM-type electrolytic cell.

Example 1

Electrolysis was performed in an electrolytic cell containing a sulfuric acid-manganese sulfate mixed solution having a sulfuric acid concentration of 35 g/L and a manganese sulfate concentration of 31 g/L. Accordingly, a manganese oxide was electrodeposited onto a conductive substrate, which was a platinum-coated Ti mesh (ADL-414302-5056, manufactured by FC Development Co, Ltd.). Subsequently, the conductive substrate having the manganese oxide electrodeposited thereon was immersed in an iridium salt solution bath containing 2.5 g/L of potassium hexachloroiridate ($K_2IrCl_6$) and 0.5 g/L of a sulfuric acid, at 95°C for 12 hours. Accordingly, iridium was adsorbed onto the surface of the manganese oxide. Note that the liquid in the iridium salt solution bath was measured with a UV-Vis spectrometer (UV-2550, manufactured by Shimadzu Corporation) before and after the adsorption of iridium, and the measurement confirmed that all the iridium was adsorbed onto the manganese oxide, with no iridium remaining in the iridium salt solution bath. Subsequently, an annealing treatment was performed in air at 400°C for 5 hours to produce an iridium-manganese oxide composite electrode material having the iridium-manganese oxide composite material deposited on a conductive substrate. The synthesis conditions are shown in Table 1.

[Table 1]

| | Composition of electrolyte solution | | Electrolysis conditions | | | Substrate type | Ir adsorption conditions | | | | Annealing treatment | | |
|---|---|---|---|---|---|---|---|---|---|---|---|---|---|
| | | | | | | | Ir solution | | Temperature | Time | Temperature | Time | Gas |
| | MnSO4 | H2SO4 | Temperature | Current density | Time | | K2IrCl6 | H2SO4 | | | | | |
| | (g/L) | (g/L) | (°C) | (mA/cm2) | (min.) | | (g/L) | (g/L) | (°C) | (hrs) | (°C) | (min.) | |
| Example 1 | 31 | 35 | 94 | 7 | 20 | Pt/Ti | 2.50 | 0.50 | 95 | 12 | 400 | 300 | Air |
| Example 2 | 31 | 35 | 94 | 7 | 10 | Pt/Ti | 1.25 | 0.25 | 95 | 12 | 400 | 300 | Air |
| Example 3 | 31 | 35 | 94 | 7 | 10 | Pt/Ti | 0.63 | 0.13 | 95 | 12 | 400 | 300 | Air |
| Comparative Example 1 | - | - | - | - | - | - | - | - | - | - | - | - | - |
| Comparative Example 2 | - | - | - | - | - | - | - | - | - | - | - | - | - |
| Comparative Example 3 | 31 | 35 | 94 | 7 | 60 | Pt/Ti | - | - | - | - | 450 | 300 | Air |

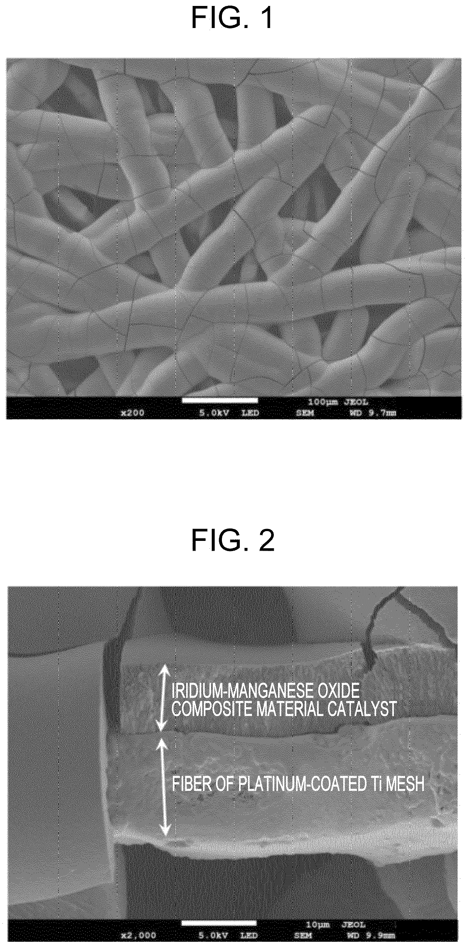

An SEM photograph of the surface of the electrode material is shown in Fig. 1, and an SEM photograph of a cross section thereof is shown in Fig. 2. Fig. 2 confirms that the iridium-manganese oxide composite electrode material was in a state in which the catalyst layer of the iridium-manganese oxide composite material was deposited on the fiber of the platinum-coated Ti mesh. Further, SEM-EDX data of a cross section of the catalyst layer of the iridium-manganese oxide composite material are shown in Fig. 3. Fig. 3 confirms that the iridium was uniformly distributed on at least a surface of the manganese oxide.

An XRD pattern of the iridium-manganese oxide composite electrode material obtained in Example 1 is shown in Fig. 4. Fig. 4 shows that diffracted rays attributable to $\gamma$-type $MnO_2$ were observed, in addition to diffracted rays of Pt and Ti derived from the conductive substrate, while no diffracted rays corresponding to iridium were detected because the amount of the iridium was small. In the iridium-manganese oxide composite electrode material, the amount of the electrodeposited manganese oxide was 3.80 $mg/cm^2$, the weight of the iridium-manganese oxide composite material was 3.88 $mg/cm^2$, and, accordingly, the amount of the iridium of the iridium-manganese oxide composite material was 0.08 $mg/cm^2$; further, the metal content ratio of the iridium, which is a ratio of a content of the iridium to a total content of the manganese and the iridium, was 0.94 atomic %. Furthermore, the iridium-manganese oxide composite material of the iridium-manganese oxide composite electrode material was measured and analyzed by XPS, and the results of the calculation were that an average metal valence of the iridium was 3.3 and that the average metal valence of the manganese was 3.7. The BET specific surface area of the iridium-manganese oxide composite material was 42 $m^2/g$. The results of these evaluations are shown in Table 2.

[Table 2]

| | Physical properties of iridium-manganese oxide composite material | | | | | | | | Activity (C.D mA/cm2 on LSV) at 80°C | |
| | Manganese oxide | | | Iridium | | Composite material | | | | |
| | Crystal system | Amount of deposition (mg/cm2) | Metal valence (-) | Amount (mg/cm2) | Metal valence (-) | Total amount of deposition (mg/cm2) | Ir/(Mn+Ir) (at%) | BET specific surface area (m2/g) | 1.8 V | 2.0 V |
|---|---|---|---|---|---|---|---|---|---|---|
| Example 1 | Y | 3.80 | 3.7 | 0.08 | 3.3 | 3.88 | 0.94 | 42 | 1230 | 2489 |
| Example 2 | Y | 1.90 | - | 0.04 | - | 1.94 | 0.94 | - | 851 | 1995 |
| Example 3 | Y | 1.90 | - | 0.02 | - | 1.92 | 0.47 | - | 907 | 2004 |
| Comparative Example 1 | - | - | - | 0.08 | - | - | - | - | 690 | 1478 |
| Comparative Example 2 | - | - | - | 1 | - | - | - | - | 1420 | 2547 |
| Comparative Example 3 | Y | 11.40 | - | - | - | - | - | - | 408 | 1266 |

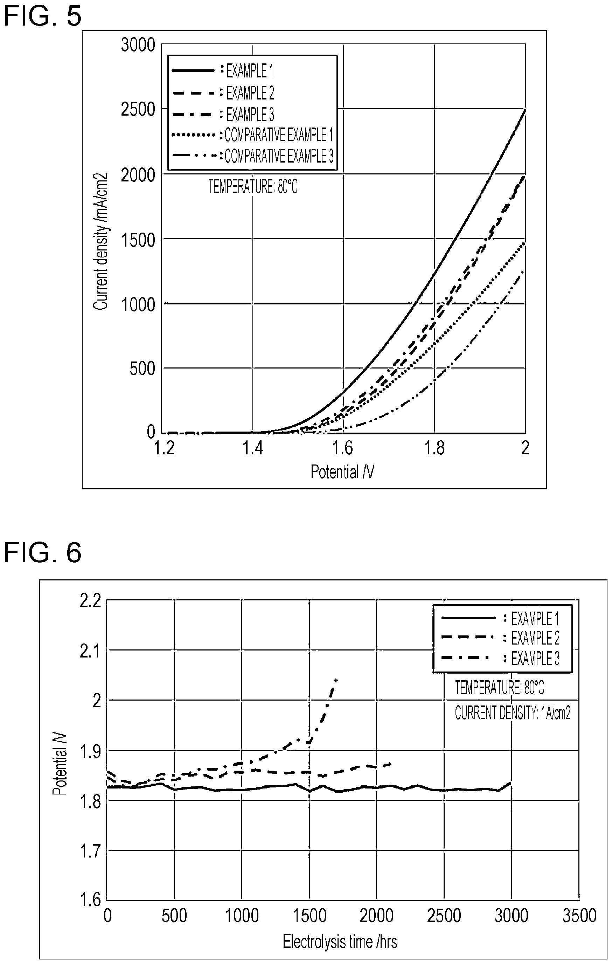

A 1 cm × 1 cm specimen was cut from the iridium-manganese oxide composite electrode material, and a PEM-type electrolytic cell was constructed in accordance with the manner described in the "<Construction of PEM-type Electrolytic Cell for Evaluation of Oxygen Evolution Electrocatalyst Properties>" section. Thereafter, the evaluation of oxygen evolution electrocatalyst properties was performed in accordance with the "<Electrochemical Measurement 1 Measurement of Current-Voltage Curve>" section. The results are shown in Table 2 and Fig. 5. Furthermore, the measurement of temporal changes in the decomposition voltage was performed in accordance with the "<Electrochemical Measurement 2 Measurement of Current-Voltage Curve>" section. The results are shown in Fig. 6.

The XAFS measurement was performed on the iridium-manganese oxide composite material. The results were that the position of the energy peak (peak position 1) in the XANES region of the Ir L3-edge spectrum was 11215 eV, and the position of the energy peak corresponding to an edge jump of 0.5 (peak position 2) in the XANES region of the Mn K-edge spectrum was 6550 eV provided that the edge jump for normalization was 1. In the XAFS measurement and analysis of the iridium-manganese oxide composite material, it was found that, in the radial structure function, the position of the peak corresponding to a manganese-oxygen bond (peak position 3) was 1.5 Å. Also, in an EXAFS measurement and analysis of the iridium-manganese oxide composite material, it was found that, in the radial structure function, the position of the peak corresponding to an iridium-oxygen bond (peak position 4) was calculated to be 1.6 Å. The results of these evaluations are shown in Table 3.

[Table 3]

| Results of XAFS measurement on iridium-manganese oxide composite material of Example 1 | | | |
|---|---|---|---|
| Peak position 1 (eV) | Peak position 2 (eV) | Peak position 3 (Å) | Peak position 4 (Å) |
| 11215 | 6550 | 1.5 | 1.6 |

Examples 2 and 3

Iridium-manganese oxide composite electrode materials were produced in accordance with the synthesis conditions of Example 1, except that the composition of the electrolyte solution and the electrodeposition time for the electrodeposition of the manganese oxide, the composition of the iridium salt solution, and the like were changed. The synthesis conditions are shown in Table 1. Regarding the iridium-manganese oxide composite electrode materials, physical properties of the iridium-manganese oxide composite materials and property values are shown in Table 2. Furthermore, the results of the evaluation of oxygen evolution electrocatalyst properties are shown in Fig. 5, and the results of the measurement of temporal changes in the decomposition voltage are shown in Fig. 6.

Examples 4 to 6

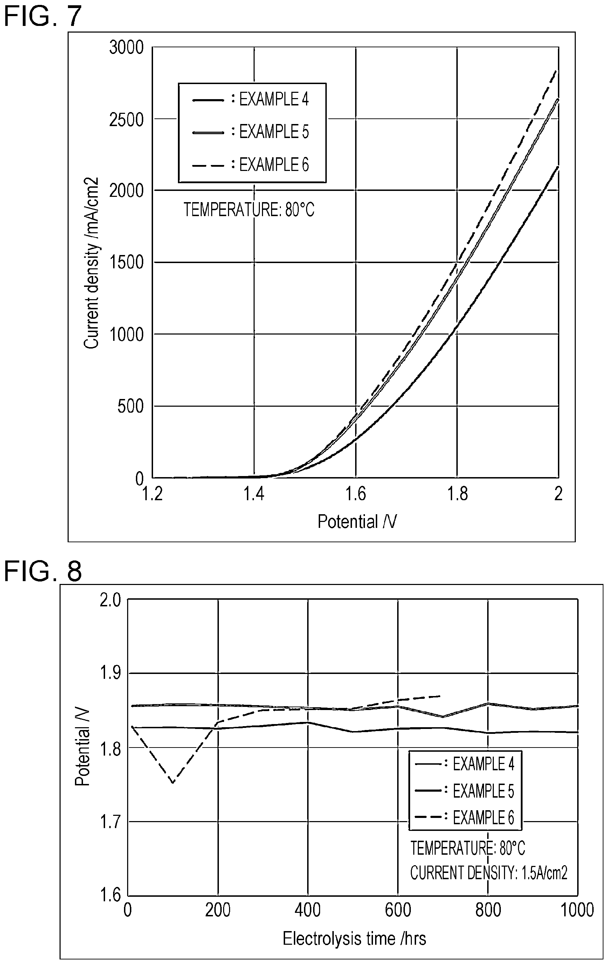

Iridium-manganese oxide composite electrode materials were produced in accordance with the synthesis conditions of Example 1, except that the electrodeposition time for the electrodeposition of the manganese oxide and the temperature for the annealing treatment were changed. The synthesis conditions are shown in Table 4. Regarding the iridium-manganese oxide composite electrode materials, physical properties of the iridium-manganese oxide composite materials and property values are shown in Table 5. Furthermore, the results of the evaluation of oxygen evolution electrocatalyst properties are shown in Fig. 7, and the results of the measurement of temporal changes in the decomposition voltage are shown in Fig. 8.

[Table 4]

| | Electrolysis conditions | | | | | | Ir adsorption conditions | | | | Annealing treatment | | |
|---|---|---|---|---|---|---|---|---|---|---|---|---|---|
| | Composition of electrolyte solution | | Temperature (°C) | Current density (mA/cm2) | Time (min.) | Substrate type | Ir solution | | Temperature (°C) | Time (hrs) | Temperature (°C) | Time (min.) | Gas |
| | MnSO4 (g/L) | H2SO4 (g/L) | | | | | K2IrCl6 (g/L) | H2SO4 (g/L) | | | | | |
| Example 4 | 31 | 35 | 94 | 7 | 20 | Pt/Ti | 2.50 | 0.500 | 95 | 12 | 450 | 300 | Air |
| Example 5 | 31 | 35 | 94 | 7 | 10 | Pt/Ti | 2.50 | 0.500 | 95 | 12 | 450 | 300 | Air |
| Example 6 | 31 | 35 | 94 | 7 | 5 | Pt/Ti | 2.50 | 0.500 | 95 | 12 | 450 | 300 | Air |

[Table 5]

| | Physical properties of iridium-manganese oxide composite material | | | | | | | | Activity (C.D mA/cm2 on LSV) at 80°C | |
| | Manganese oxide | | | Iridium | | Composite material | | | | |
| | Crystal size | Amount of deposition (mg/cm2) | Metal valence (-) | Amount (mg/cm2) | Metal valence (-) | Total amount of deposition (mg/cm2) | Ir/(Mn+Ir) (at%) | BET specific surface area (m2/g) | 1.8 V | 2.0 V |
|---|---|---|---|---|---|---|---|---|---|---|
| Example 4 | Y | 3.80 | - | 0.08 | - | 3.88 | 0.94 | - | 1056 | 2159 |
| Example 5 | Y | 1.90 | - | 0.08 | - | 1.98 | 1.87 | - | 1393 | 2629 |
| Example 6 | Y | 0.95 | - | 0.08 | - | 1.03 | 3.67 | - | 1498 | 2848 |

Comparative Example 1

A commercially available iridium oxide catalyst (manufactured by Elyst) was used. An anode having an iridium content of 0.08 mg/cm$^2$ was produced, a membrane-electrode assembly was produced, and then, a PEM-type electrolytic cell was constructed. Thereafter, an evaluation of an oxygen evolution electrocatalyst was performed in accordance with the "<Electrochemical Measurement 1 Measurement of Current-Voltage Curve>" section. The results of the evaluation of properties are shown in Table 2 and Fig. 5.

Comparative Example 2

An anode and a membrane-electrode assembly were produced in accordance with Comparative Example 1, except that the iridium content was 1 mg/cm$^2$. Thereafter, the evaluation of an oxygen evolution electrocatalyst was performed. The results of the evaluation of properties are shown in Table 2.

Comparative Example 3

Electrolysis was performed in an electrolytic cell containing a sulfuric acid-manganese sulfate mixed solution having 35 g/L of a sulfuric acid and a manganese sulfate concentration of 31 g/L. Accordingly, a manganese oxide was electrodeposited onto a conductive substrate, which was a platinum-coated titanium mesh (ADL-414302-5056, manufactured by FC Development Co, Ltd.). Subsequently, an annealing treatment was performed in air at 450°C for 5 hours to produce a manganese oxide electrode material. The synthesis conditions are shown in Table 1, and physical properties of the manganese oxide composite material are shown in Table 2. Subsequently, a PEM-type electrolytic cell was constructed with the manganese oxide electrode material. Thereafter, the evaluation of an oxygen evolution electrocatalyst was performed in accordance with the "<Electrochemical Measurement Measurement of Current-Voltage Curve>" section. The results of the evaluation of properties are shown in Table 2 and Fig. 5.

As shown in Figs. 5 and 6, the iridium-manganese oxide composite material and the iridium-manganese oxide composite electrode material of the present invention have a structure that, in principle, increases energy conversion efficiency, and they were found to exhibit very good oxygen evolution electrocatalytic activity and durability in PEM-type electrolytic cells, for which the use of a non-noble metal catalyst is desired, while significantly reducing a typical amount of use of iridium compared with commercially available iridium-based catalysts, with the reduction being in an amount of 90% or more.

As shown in Fig. 7 and 8, the iridium-manganese oxide composite material and the iridium-manganese oxide composite electrode material of the present invention were found to exhibit very good oxygen evolution electrocatalytic activity and durability even when the amount of deposition of the manganese oxide was less than or equal to 1 mg/cm$^2$.

Industrial Applicability

The iridium-manganese oxide composite material and the iridium-manganese oxide composite electrode material of the present invention have a high oxygen evolution electrocatalytic activity comparable to that of noble-metal-based catalysts of the related art despite the fact that the amount of use of iridium is much smaller than those of iridium-based catalysts of the related art. Accordingly, in instances where the materials are used as anode catalysts for oxygen evolution in industrial water electrolysis that is performed under alkaline or neutral conditions or in water electrolysis that uses a PEM-type electrolytic cell, the production of hydrogen and oxygen at very low production cost is made possible.

Furthermore, carbon dioxide may be included in a reaction system such as the above-mentioned system for water electrolysis. In this case, the carbon dioxide or the like can be reduced at the cathode to produce hydrocarbon compounds (formic acid, formaldehyde, methanol, methane, ethane, propane and the like).

The entire content of the specification, claims, drawings and abstract of Japanese Patent Application No. 2021-99336, filed on June 15, 2021, is incorporated herein by reference and incorporated as a disclosure of the specification of the present invention.

**Claims**

1. An iridium-manganese oxide composite material comprising:

   a manganese oxide; and
   iridium distributed on at least a surface of the manganese oxide, the iridium having a metal valence of 3.1 or greater and 3.8 or less.

**2.** The iridium-manganese oxide composite material according to Claim 1, wherein, in an instance where the iridium-manganese oxide composite material coats at least a portion of a conductive substrate, a content of the iridium is 0.01 mg/cm$^2$ or greater and 0.2 mg/cm$^2$ or less per geometric area of the conductive substrate.

**3.** The iridium-manganese oxide composite material according to Claim 1 or 2, wherein a metal content ratio, which is a ratio of a content of the iridium to a total content of manganese and the iridium, is 0.2 atomic % or greater and 10 atomic % or less.

**4.** The iridium-manganese oxide composite material according to any one of Claims 1 to 3, wherein an Ir L3-edge spectrum obtained in an XAFS measurement has a peak appearing in a XANES region, and a position of the peak is 11200 eV or greater and 11230 eV or less.

**5.** The iridium-manganese oxide composite material according to any one of Claims 1 to 4, wherein a radial structure function obtained in an XAFS measurement has a peak corresponding to an iridium-oxygen bond, and a position of the peak is 1.0 Å or greater and 2.0 Å or less.

**6.** The iridium-manganese oxide composite material according to any one of Claims 1 to 5, wherein the iridium-manganese oxide composite material has a BET specific surface area of 15 m$^2$/g or greater and 100 m$^2$/g or less.

**7.** The iridium-manganese oxide composite material according to any one of Claims 1 to 6, wherein the manganese oxide has a manganese metal valence of 3.5 or greater and 4.0 or less.

**8.** The iridium-manganese oxide composite material according to any one of Claims 1 to 7, wherein, in an instance where the iridium-manganese oxide composite material coats at least a portion of a conductive substrate, a content of manganese is 0.12 mg/cm$^2$ or greater and 14.35 mg/cm$^2$ or less per geometric area of the conductive substrate.

**9.** The iridium-manganese oxide composite material according to any one of Claims 1 to 8, wherein the manganese oxide is an electrolytic manganese dioxide.

**10.** The iridium-manganese oxide composite material according to any one of Claims 1 to 9, wherein the manganese oxide is a manganese dioxide having one of crystalline phases or having a mixed phase including at least two of the crystalline phases, where the crystalline phases are a γ-type phase, a β-type phase, an ε-type phase and an α-type phase.

**11.** An iridium-manganese oxide composite electrode material comprising:

a conductive substrate formed of a conductive fiber; and
the iridium-manganese oxide composite material according to any one of Claims 1 to 10, the iridium-manganese oxide composite material being coated on at least a portion of the conductive substrate.

**12.** The iridium-manganese oxide composite electrode material according to Claim 11, wherein the iridium-manganese oxide composite material is present in an amount of 0.1 mg/cm$^2$ or greater and 20 mg/cm$^2$ or less per geometric area of the conductive substrate.

**13.** The iridium-manganese oxide composite electrode material according to Claim 11 or 12, wherein the conductive substrate is formed of carbon, titanium or platinum-coated titanium.

**14.** A membrane-electrode assembly comprising:

an electrode on which the iridium-manganese oxide composite material according to any one of Claims 1 to 10 is supported; and
a polymer electrolyte membrane.

**15.** A method for producing the iridium-manganese oxide composite material according to any one of Claims 1 to 10 comprising:

preparing a manganese oxide by performing electrolysis on a mixed solution containing a sulfuric acid and manganese sulfate and then immersing or contacting the manganese oxide in or with an iridium salt solution; and

subsequently performing an annealing treatment.

16. The method for producing the iridium-manganese oxide composite material according to Claim 15, wherein a concentration of the sulfuric acid in the mixed solution containing the sulfuric acid and the manganese sulfate is 5 g/L or greater and 65 g/L or less.

17. The method for producing the iridium-manganese oxide composite material according to Claim 15 or 16, wherein the electrolysis of the mixed solution containing the sulfuric acid and the manganese sulfate is performed at a current density of 0.3 mA/cm$^2$ or greater and 20 mA/cm$^2$ or less.

18. The method for producing the iridium-manganese oxide composite material according to any one of Claims 15 to 17, wherein an iridium salt in the iridium salt solution is $K_2IrCl_6$.

19. The method for producing the iridium-manganese oxide composite material according to any one of Claims 15 to 18, wherein the annealing treatment is performed at a temperature of greater than 100°C and 600°C or less for a time of 10 minutes or more and 24 hours or less.

20. A method for producing the iridium-manganese oxide composite electrode material according to any one of Claims 11 to 13 comprising:

   electrodepositing a manganese oxide on the at least a portion of the conductive substrate formed of a conductive fiber, by performing electrolysis on a mixed solution containing a sulfuric acid and manganese sulfate;
   subsequently immersing or contacting the manganese oxide in or with an iridium salt solution, thereby uniformly distributing iridium on the at least a surface of the manganese oxide and adsorbing the iridium thereon; and
   subsequently performing an annealing treatment.

21. The method for producing the iridium-manganese oxide composite electrode material according to Claim 20, wherein a concentration of the sulfuric acid in the mixed solution containing the sulfuric acid and the manganese sulfate is 5 g/L or greater and 65 g/L or less.

22. The method for producing the iridium-manganese oxide composite electrode material according to Claim 20 or 21, wherein the electrolysis of the mixed solution containing the sulfuric acid and the manganese sulfate is performed at a current density of 0.3 mA/cm$^2$ or greater and 20 mA/cm$^2$ or less.

23. The method for producing the iridium-manganese oxide composite electrode material according to any one of Claims 20 to 22, wherein an iridium salt in the iridium salt solution is $K_2IrCl_6$.

24. The method for producing the iridium-manganese oxide composite electrode material according to any one of Claims 20 to 23, wherein the annealing treatment is performed at a temperature of greater than 100°C and 600°C or less for a time of 10 minutes or more and 24 hours or less.

25. An oxygen evolution electrode active material comprising the iridium-manganese oxide composite material according to any one of Claims 1 to 10, the oxygen evolution electrode active material being associated with water electrolysis.

26. An oxygen evolution electrode comprising the oxygen evolution electrode active material according to Claim 25.

27. A membrane-electrode assembly comprising:

   the oxygen evolution electrode according to Claim 26; and
   a polymer electrolyte membrane.

28. A water electrolysis device comprising the iridium-manganese oxide composite electrode material according to any one of Claims 11 to 13 or the oxygen evolution electrode according to Claim 26.

29. A method for producing hydrogen comprising performing water electrolysis by using the iridium-manganese oxide composite electrode material according to any one of Claims 11 to 13 or the oxygen evolution electrode according to Claim 26.

# FIG. 1

# FIG. 2

IRIDIUM-MANGANESE OXIDE
COMPOSITE MATERIAL CATALYST

FIBER OF PLATINUM-COATED Ti MESH

# FIG. 3

SEM PHOTOGRAPH OF EXTERIOR VIEW

5.0 μm

DISTRIBUTION OF ELEMENTAL O

5.0 μm     O K

DISTRIBUTION OF ELEMENTAL Ir

5.0 μm     Ir M

DISTRIBUTION OF ELEMENTAL Mn

5.0 μm     Mn K

# FIG. 4

$*$ : DIFFRACTED RAYS ATTRIBUTABLE TO $\gamma$-$MnO_2$

Intensity /a.u.

EXAMPLE 1

PLATINUM-COATED TITANIUM MESH SUBSTRATE

2θ /deg.

FIG. 5

FIG. 6

## FIG. 7

Legend:
— : EXAMPLE 4
— : EXAMPLE 5
- - : EXAMPLE 6
TEMPERATURE: 80°C

Y-axis: Current density /mA/cm2
X-axis: Potential /V

## FIG. 8

Legend:
— : EXAMPLE 4
— : EXAMPLE 5
- - : EXAMPLE 6
TEMPERATURE: 80°C
CURRENT DENSITY: 1.5A/cm2

Y-axis: Potential /V
X-axis: Electrolysis time /hrs

## INTERNATIONAL SEARCH REPORT

| International application No. |
| --- |
| **PCT/JP2022/023599** |

**A. CLASSIFICATION OF SUBJECT MATTER**

*C25B 11/093*(2021.01)i; *B01J 23/656*(2006.01)i; *B01J 37/02*(2006.01)i; *B01J 37/08*(2006.01)i; *C25B 1/04*(2021.01)i;
*C25B 1/21*(2006.01)i; *C25B 9/00*(2021.01)i; *C25B 9/23*(2021.01)i; *C25B 11/052*(2021.01)i; *C25B 11/063*(2021.01)i;
*C25B 11/065*(2021.01)i; *C25D 9/04*(2006.01)i
FI: C25B11/093; C25B11/052; C25B11/065; C25B11/063; C25B9/00 A; C25B1/04; C25B9/23; C25B1/21; B01J37/02
101A; B01J37/08; B01J23/656 M; C25D9/04

According to International Patent Classification (IPC) or to both national classification and IPC

**B. FIELDS SEARCHED**

Minimum documentation searched (classification system followed by classification symbols)

C25B11/093; B01J23/656; B01J37/02; B01J37/08; C25B1/04; C25B1/21; C25B9/00; C25B9/23; C25B11/052; C25B11/063;
C25B11/065; C25D9/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-263492 A (NATIONAL INSTITUTE OF ADVANCED INDUSTRIAL & TECHNOLOGY) 17 September 2002 (2002-09-17) | 1-29 |
| A | JP 59-140383 A (ISHIFUKU KINZOKU KOGYO KK) 11 August 1984 (1984-08-11) | 1-29 |
| A | JP 58-136790 A (OSAKA SODA CO LTD) 13 August 1983 (1983-08-13) | 1-29 |
| A | JP 57-73192 A (DIAMOND SHAMROCK CORP) 07 May 1982 (1982-05-07) | 1-29 |
| A | PFEIFER, Verena et al. Reactive oxygen species in iridium-based OER catalysts. Chemical Science. 2016, 7 (11), 6791-6795 pp. 6791-6795 | 1-29 |
| P, A | WO 2021/193467 A1 (RIKEN) 30 September 2021 (2021-09-30) | 1-29 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 August 2022** | **30 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/023599**

| Patent document cited in search report | | | Publication date (day/month/year) | Patent family member(s) | Publication date (day/month/year) |
|---|---|---|---|---|---|
| JP | 2002-263492 | A | 17 September 2002 | (Family: none) | |
| JP | 59-140383 | A | 11 August 1984 | (Family: none) | |
| JP | 58-136790 | A | 13 August 1983 | (Family: none) | |
| JP | 57-73192 | A | 07 May 1982 | US 4435313 A | |
| WO | 2021/193467 | A1 | 30 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8269761 A
- JP 2007514520 W
- JP 2015192993 A
- JP 2009154753 A
- JP 2019117199 A
- JP 2021099336 A

**Non-patent literature cited in the description**

- S. TRASATTI ; G. BUZZANCA. *J. Electroanal. Chem,* 1971, vol. 29, A1
- A. HARRIMAN ; I. J. PICKERING ; J. M. THOMAS ; P. A. CHRISTENSEN. *J. Chem. Soc., Faraday Trans,* 1988, vol. 1 (84), 2795
- Y. ZHAO ; N. M. VARGAS-BARBOSA ; E. A. HERNANDEZ-PAGAN ; T. E. MALLOUK. *Small,* 2011, vol. 7, 2087
- F. BIROL. World Energy Outlook 2016. *International Energy Agency (IEA), Paris,* 2016
- M. M. NAJAFPOUR ; G. RENGER ; M. HOLYNSKA ; A. N. MOGHADDAM ; E. -M. ARO ; R. CARPENTIER ; H. NISHIHARA ; J. J. EATON-RYE ; J. -R. SHEN ; S. I. ALLAKHVERDI-EV. *Chem. Rev,* 2016, vol. 116, 2886
- T. TAKASHIMA ; K. ISHIKAWA ; H. IRIE. *J. Phys. Chem. C,* 2016, vol. 120, 24827
- J. B. GERKEN ; J. G. MCALPIN ; J. Y. C. CHEN ; M. L. RIGSBY ; W. H. CASEY ; R. D. BRITT ; S. S. STAHL. *J. Am. Chem. Soc,* 2011, vol. 133, 14431
- M. DINCA ; Y. SURENDRANATH ; D. G. NOCERA. *Proc. Natl. Acad. Sci. U.S.A.,* 2010, vol. 107, 10337